(19) Europäisches Patentamt
European Patent Office
Office européen des brevets

(11) EP 0 754 737 B1

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(51) Int Cl.$^6$: **C09D 5/02**, C09D 7/12

(21) Anmeldenummer: **96110776.0**

(22) Anmeldetag: **04.07.1996**

(54) **Beschichtungsmassen auf Basis von in Wasser redispergierbaren, wasserlösliches Polymer und Organosiliciumverbindung enthaltenden Pulvern**

Coating containing powders based on in-water-redispersible, water-soluble polymer and organo silicon compound

Composition de revêtement à base de poudre contenant un polymère hydrosoluble, redispersable dans l'eau et un composé de silicium organique

(84) Benannte Vertragsstaaten:
**AT BE CH DE ES FR GB IT LI NL SE**

(30) Priorität: **10.07.1995 DE 19525068**

(43) Veröffentlichungstag der Anmeldung:
**22.01.1997 Patentblatt 1997/04**

(73) Patentinhaber: **Wacker-Chemie GmbH**
**81737 München (DE)**

(72) Erfinder:
• **Weidner, Richard, Dr.**
**84489 Burghausen (DE)**

• **Frey, Volker, Dr.**
**84489 Burghausen (DE)**
• **König-Lumer, Ingeborg**
**84489 Burghausen (DE)**
• **Mayer, Hans, Dr.**
**84489 Burghausen (DE)**

(74) Vertreter: **Budczinski, Angelika et al**
**c/o Wacker-Chemie GmbH,**
**Hanns-Seidel-Platz 4**
**81737 München (DE)**

(56) Entgegenhaltungen:
**EP-A- 0 228 657          EP-A- 0 279 373**
**DE-A- 1 031 910**

**Beschreibung**

Die Erfindung betrifft Beschichtungsmassen für mineralische Untergründe auf Basis von in Wasser redispergierbaren, wasserlösliches Polymer und Organosiliciumverbindung enthaltenden Pulvern.

Siliconharzbeschichtungssysteme, insbesondere pigmentierte dünne und dicke Beschichtungssysteme, sind als Siliconharz(emulsions)farben und Siliconharzputze bekannt und eignen sich besonders zum Beschichten von mineralischen Untergründen, beispielsweise von Baustoffen wie Putz, Beton, Faserzement, Naturstein und dergleichen mehr. Als Bindemittel für derartige Siliconharzbeschichtungssysteme werden Siliconharze üblicherweise als Siliconharzemulsionen eingesetzt. Hierzu sei beispielsweise auf DE 37 13 126 A (Wacker-Chemie GmbH; ausgegeben am 3. November 1988) bzw. die entsprechende US-A 4,833,187 verwiesen.

In der Fachwelt werden Siliconharzfarben häufig wie folgt definiert:

a) Wasserverdünnbare Siliconharzfarben enthalten als Bindemittel überwiegend Siliconharze;

b) Es werden die üblichen aus dem Bereich der Außendispersions- und Mineralfarben bewährten Füll- und Hilfsstoffe sowie Pigmente verwendet;

c) Der Gesamtbindemittelgehalt soll so gewählt werden, daß die Anforderungen an die Eigenschaften - Wasserabweisung, Wasserdampfdurchlässigkeit usw. - erfüllt werden.

In der Europa-Norm werden Fassadenfarben nach ihrer Zusammensetzung, ihrem Aussehen und ihren physikalischen Eigenschaften unterteilt. Dabei wird der Beschichtungsstoff nach dem Bindemittelgehalt benannt, dessen wesentliche Merkmale er trägt. Im Falle der Siliconharzfarbe ist dies das Bindemittel Siliconharz. Als physikalische Eigenschaften werden u.a. Wasserdampfdurchlässigkeit und Wasserdurchlässigkeit aufgeführt. Die Siliconharzfarbe wird im allgemeinen hinsichtlich der Wasserdampfdurchlässigkeit als hoch und hinsichtlich der Wasserdurchlässigkeit als gering eingestuft. Diese Eigenschaften der hochwasserdampf-, aber wenig wasserdurchlässigen Siliconharzfarben sowie deren Langlebigkeit sind im wesentlichen auf das Bindemittel Siliconharz zurückzuführen.

In Wasser redispergierbare, Organosiliciumverbindungen enthaltende Pulver und Verfahren zu deren Herstellung sind bekannt. So beschreibt beispielsweise EP 228 657 B (Wacker-Chemie GmbH; ausgegeben am 16. März 1994) bzw. die entsprechende US-A 4,704,416 in Wasser redispergierbare, wasserlösliches Polymer und mindestens eine organische Siliciumverbindung enthaltende Pulver, die durch Sprühtrocknung wäßriger Mischungen erhalten werden. Derartige Pulver dienen als Zusätze zu Putzen, hydraulischen Bindemitteln, Lehm oder Anstrichfarben, in mit Wasser verdünnter Form zur Hydrophobierung von Schüttgütern und als Bindemittel für feinteilige anorganische oder organische Stoffe. Des weiteren sei noch auf EP-B 279 373 (Wacker-Chemie GmbH; ausgegeben am 28.04. 1993) und DE 37 04 439 A (Wacker-Chemie GmbH; ausgegeben am 25. August 1988) bzw. die entsprechende US-A 4,851,047 verwiesen.

Gegenstand der Erfindung sind Beschichtungsmassen auf Basis von in Wasser redispergierbaren, wasserlösliches Polymer und Organosiliciumverbindungen enthaltenden Pulvern, dadurch gekennzeichnet, daß die Organosiliciumverbindungen aus mindestens einer niedermolekularen Organosiliciumverbindung mit einer Viskosität von höchstens 5 000 $mm^2$/s bei 25°C und mindestens einem hochmolekularen Organopolysiloxanharz, das eine Viskosität von mindestens 100 000 $mm^2$/s bei 25°C hat oder bei Raumtemperatur fest ist, bestehen.

Für die erfindungsgemäßen Beschichtungsmassen sind dabei Pulver geeignet, die die niedermolekulare Organosiliciumverbindung und das hochmolekulare Organopolysiloxanharz gemeinsam enthalten, oder es kann auch eine Kombination eines Pulvers, welches nur die niedermolekulare Organosiliciumverbindung enthält, mit einem Pulver, welches nur das hochmolekulare Organopolysiloxanharz enthält, eingesetzt werden.

Bei den erfindungsgemäßen Beschichtungsmassen handelt es sich vorzugsweise um gegebenenfalls pigmentierte dünne, pastöse und pulvrige Beschichtungssysteme für mineralische Untergründe. Beispiele für dünne Beschichtungssysteme sind Grundierungen. Beispiele für pastöse Beschichtungssysteme sind wäßrige, streichfertige Siliconharzfarben und Siliconharzputze. Beispiele für pulvrige Beschichtungssysteme sind Pulverfarben und Trockenputze.

Die erfindungsgemäß eingesetzten niedermolekularen Organosiliciumverbindungen haben vorzugsweise eine Viskosität von 0,5 bis 200 $mm^2$/s, besonders bevorzugt von 0,5 bis 100 $mm^2$/s, insbesondere von 1 bis zu 30 $mm^2$/s, jeweils bei 25°C.

Bei den erfindungsgemäß eingesetzten niedermolekularen Organosiliciumverbindungen handelt es sich bevorzugt um solche der Formel bzw. aus Einheiten der Formel

$$R_a(R^1O)_b SiO_{4-(a+b)/2} \qquad \text{(I),}$$

wobei

R gleich oder verschieden sein kann und einen einwertigen organischen Rest bedeutet,

$R^1$ gleich oder verschieden sein kann und ein Wasserstoffatom oder Alkylrest bedeutet,

a gleich 0, 1, 2 oder 3 ist und

b gleich 0, 1, 2, 3 oder 4 ist,

mit der Maßgabe, daß die Summe aus a+b kleiner oder gleich 4 ist und die Organosiliciumverbindung eine Viskosität von höchstens 5 000 $mm^2$/s bei 25°C hat.

Bei den erfindungsgemäß eingesetzten niedermolekularen Organosiliciumverbindungen der Formel (I) kann es sich um Silane oder Organo(poly)siloxane handeln, wobei im Fall von Silanen in Formel (I) a bevorzugt 1 oder 2, besonders bevorzugt 1, ist und b bevorzugt 3 oder 2, besonders bevorzugt 3, ist und die Summe aus a+b gleich 4 ist. Handelt es sich bei der Organosiliciumverbindung der Formel (I) um Organo(poly)siloxane, liegt der durchschnittliche Wert für a vorzugsweise zwischen 0,1 und 2, besonders bevorzugt zwischen 0,5 und 2, und der durchschnittliche Wert für b vorzugsweise zwischen 0,1 und 2,0, besonders bevorzugt zwischen 0,2 und 1,9, wobei die Summe aus a+b in diesem Fall kleiner oder gleich 3 ist.

Bei dem Rest R handelt es sich jeweils unabhängig voneinander vorzugsweise um einwertige gegebenenfalls substituierte Kohlenwasserstoffreste mit 1 bis 18 Kohlenstoffatomen, besonders bevorzugt um Kohlenwasserstoffreste mit 1 bis 18 Kohlenstoffatomen.

Beispiele für den Rest R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-, Hexylreste, wie der n-Hexylrest, Heptylreste, wie der n-Heptylrest, Octylreste, wie der n-Octylrest und der iso-Octylrest, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenyl-, Naphthyl- und Anthryl- und Phenanthrylrest; Alkarylreste, wie o-,m-, p-Tolylreste, Xylylreste und Ethylphenylreste; Aralkylreste, wie der Benzylrest, der α- und der β-Phenylethylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropylund 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und der 3-Mercaptopropylrest; Cyanoalkylreste, wie der 2-Cyanoethyl- und 3-Cyanopropylrest; Acryloxyalkylreste, wie der 3-Acryloxypropyl- und 3-Methacryloxypropylrest; Aminoalkylreste, wie der 3-Aminopropyl-, N-(2-Aminoethyl)-3-aminopropyl- und N-(2-Aminoethyl)-3-amino-(2-methyl)-propylrest; Aminoarylreste, wie der Aminophenylrest; Hydroxyalkylreste, wie der Hydroxypropylrest.

Bei dem Rest R handelt es sich besonders bevorzugt um den Methyl-, Propyl-, n-Octyl- und iso-Octyl, wie den 2,2,4-Trimethylpentyl- und 2-Ethylhexylrest.

Beispiele für den Rest $R^1$ sind Wasserstoff und die für den Rest R angegebenen Beispiele für Alkylreste.

Bei dem Rest $R^1$ handelt es sich bevorzugt um ein Wasserstoffatom und um Alkylgruppen mit 1 bis 4 Kohlenstoffatomen, wobei der Methyl- und der Ethylrest besonders bevorzugt sind.

Besonders bevorzugt handelt es sich bei den erfindungsgemäß verwendeten niedermolekularen Organosilicumverbindungen gemäß Formel (I) um Methyltrimethoxysilan, n-Octyltrimethoxysilan, iso-Octyltrimethoxysilan, 2,2,4-Trimethylpentyltrimethoxysilan und 2-Ethylhexyltrimethoxysilan, Methyltriethoxysilan, n-Octyltriethoxysilan, iso-Octyltriethoxysilan, 2,2,4-Trimethylpentyltriethoxysilan und 2-Ethylhexyltriethoxysilan, deren Teilhydrolysate sowie Teilhydrolysate ausgehend von Gemischen der genannten Octyl- und Methylalkoxysilane, mit der Maßgabe, daß diese Teilhydrolysate eine Viskosität von höchstens 5 000 $mm^2$/s bei 25°C aufweisen.

Die erfindungsgemäß eingesetzten, niedermolekularen Organosiliciumverbindungen sind Handelsprodukte bzw. können nach in der Silicumchemie gängigen Methoden hergestellt werden.

Bei den erfindungsgemäß eingesetzten, niedermolekularen Organosiliciumverbindungen kann es sich um eine einzelne Art von niedermolekularen Organosiliciumverbindungen wie auch um ein Gemisch aus mindestens zwei verschiedenen Arten derartiger niedermolekularer Organosiliciumverbindungen handeln.

Bei den erfindungsgemäß eingesetzten hochmolekularen Organopolysiloxanharzen handelt es sich bevorzugt um solche aus Einheiten der Formel

$$R^2{}_c(R^3O)_d SiO_{4-(c+d)/2} \qquad (II),$$

wobei

$R^2$ gleich oder verschieden sein kann und eine für R angegebene Bedeutung hat,

$R^3$  gleich oder verschieden sein kann und eine für $R^1$ angegebene Bedeutung hat,

c  gleich 0, 1, 2 oder 3, durchschnittlich vorzugsweise 0,5 bis 1,5, durchschnittlich besonders bevorzugt 0,8 bis 1,3, ist und

d  gleich 0, 1, 2 oder 3, durchschnittlich vorzugsweise 0 bis 1,1, durchschnittlich besonders bevorzugt 0,01 bis 0,1, ist,

mit der Maßgabe, daß die Summe aus c+d kleiner oder gleich 3 ist und diese Organopolysiloxanharze eine Viskosität von mindestens 100 000 mm²/s bei 25°C haben bzw. bei Raumtemperatur fest sind.

Die erfindungsgemäß eingesetzten hochmolekularen Organopolysiloxanharze haben dabei im allgemeinen Molekulargewichte von vorzugsweise mindestens 3000 g/mol, insbesondere mindestens 4000 g/mol, wobei die Molekulargewichte mittels Gelpermeationschromatographie bestimmt werden.

Bei dem Rest $R^2$ handelt es sich besonders bevorzugt um den Methylrest.

Bei dem Rest $R^3$ handelt es sich besonders bevorzugt um ein Wasserstoffatom, den Methyl- und den Ethylrest.

Beispiele für die erfindungsgemäß eingesetzten hochmolekularen Organopolysiloxanharze sind bei Raumtemperatur feste Harze der Formel $Me_{1,03}Si_{1,47}(OEt)_{0,04}$ und $Me_{1,14}SiO_{1,40}(OEt)_{0,06}$, wobei Me gleich Methyl und Et gleich Ethyl ist.

Die erfindungsgemäß eingesetzten, hochmolekularen Organopolysiloxanharze sind handelsübliche Produkte bzw. in der Siliciumchemie nach gängigen Methoden herstellbar.

Bei den erfindungsgemäß eingesetzten, hochmolekularen Organopolysiloxanharzen kann es sich um eine einzelne Art von hochmolekularem Organopolysiloxanharz wie auch um ein Gemisch aus mindestens zwei verschiedenen Arten derartiger hochmolekularer Organopolysiloxanharze handeln.

Bei den erfindungsgemäßen Beschichtungsmassen beträgt der Anteil an niedermolekularer Organosiliciumverbindung bevorzugt 3 bis 100 Gewichtsprozent, besonders bevorzugt 5 bis 80 Gewichtsprozent, insbesondere 10 bis 50 Gewichtsprozent, jeweils bezogen auf das Gesamtgewicht an eingesetztem, hochmolekularen Organopolysiloxanharz.

Die in den erfindungsgemäßen Beschichtungsmassen enthaltenen, redispergierbaren Pulver enthalten vorzugsweise insgesamt 30 bis 93 Gewichtsprozent, besonders bevorzugt 60 bis 90 Gewichtsprozent an niedermolekularer Organosiliciumverbindung sowie Organopolysiloxanharz, jeweils bezogen auf das Gesamtgewicht des Pulvers (berechnet als wasserfreies Pulver).

Als wasserlösliche Polymere sollen im Rahmen der vorliegenden Erfindung solche organischen Polymere verstanden werden, deren Löslichkeit bei Raumtemperatur und dem Druck der umgebenden Atmosphäre mindestens 1 g pro 100 g Wasser beträgt.

Als erfindungsgemäß eingesetzte wasserlösliche Polymere sind durch Verseifung von Polyvinylacetat hergestellte Polyvinylalkohole mit einer Verseifungszahl (= Menge an KOH in mg, die zur Verseifung der restlichen Acetatgruppen erforderlich sind) von 100 bis 240 und einem viskosimetrisch ermittelten Molekulargewicht von 15 000 bis 100 000 bevorzugt.

Weitere Beispiele für wasserlösliche Polymere, die zur Herstellung der erfindungsgemäß eingesetzten, redispergierbaren Pulver eingesetzt werden können, sind teilweise hydrolysierte mit Aminogruppen, Carbonsäuregruppen sowie Alkylgruppen modifizierte Polyvinylacetatpolymere, Vinylpyrrolidon-Polymere, insbesondere Polyvinylpyrrolidone mit einem Molekulargewicht von 5 000 bis 400 000, Stärken und Stärkederivate, wie hydroxyalkylierte Stärken, sulfatierte Stärken, phosphatierte Stärken, Stärken, die sowohl sulfatiert als auch phosphatiert sind, Carboxymethylstärken, abgebaute Stärken, z.B. Dextrine, wasserlösliche Polyacrylate, wasserlösliche Polymethacrylate, wasserlösliche Poly (meth)-acrylamide, Polymaleinate, Polyvinylsulfonate, wasserlösliche Celluloseether, wie Carboxymethylcellulosen, Hydroxyalkylcellulosen, Methylcellulosen, Cellulosemischether, wasserlösliche Proteine, wie Casein, Sojaproteine und Gelatine, Copolymere aus Styrol und Maleinsäure sowie Styrol und Fumarsäure, Kondensationsprodukte aus sulfonierten Phenolen, Harnstoff, weiteren organischen Stickstoff-Basen und Formaldehyd, beispielsweise wie in DE 41 18 007 A1 (BASF AG; ausgegeben am 3. Dezember 1992) bzw. der entsprechenden US-A 5,342,916 beschrieben, wasserlösliche Alkali- und Erdalkalisalze von Naphthalinsulfonsäure-Formaldehyd-Kondensationsprodukten, beispielsweise wie in DE 31 43 070 A1 (BASF AG; ausgegeben am 11. Mai 1983) beschrieben bzw. Phenolsulfonsäure-Formaldehyd-Kondensationsprodukten beispielsweise wie in EP-A1 407 889 (BASF AG; ausgegeben am 16. Januar 1991) bzw. der entsprechenden US-A 5,225,478 beschrieben sowie die in DE 40 21 216 Al (BASF AG; ausgegeben am 9. Januar 1992) bzw. der entsprechenden US-A 5,342,897 beschriebenen wasserlöslichen Copolymere.

Die erfindungsgemäß eingesetzten wasserlöslichen Polymere sind handelsübliche Produkte bzw. können nach in der organischen Chemie gängigen Methoden hergestellt werden.

Die erfindungsgemäß eingesetzten Pulver können eine Art von wasserlöslichem Polymer oder mindestens zwei verschiedene Arten von wasserlöslichem Polymer enthalten.

Wasserlösliches Polymer wird in Mengen von bevorzugt 5 bis 40 Gewichtsprozent, besonders bevorzugt von 5 bis 25 Gewichtsprozent, insbesondere von 7 bis 15 Gewichtsprozent, jeweils bezogen auf das Gesamtgewicht der zur Herstellung des jeweiligen Pulvers eingesetzten Organosiliciumverbindungen, verwendet.

Die Herstellung der erfindungsgemäß eingesetzten Pulver kann nach den bisher bekannten Verfahren erfolgen. Hierzu sei z.B. auf die DE 41 31 939 Al (Wacker-Chemie GmbH; ausgegeben am 01. April 1993) und die eingangs zitierten Veröffentlichungen EP 228 657 B sowie DE 37 04 400 A verwiesen.

Vorteilhafterweise erfolgt die Herstellung der erfindungsgemäß eingesetzten Pulver durch Trocknung, wie zum Beispiel Dünnschichttrocknung, Walzentrocknung, Gefriertrocknung und Sprühtrocknung, wobei Dünnschichttrocknung, Walzentrocknung und Sprühtrocknung bevorzugt und Sprühtrocknung besonders bevorzugt ist, von Emulsionen oder Suspensionen der Organosiliciumverbindungen in Wasser, welches wasserlösliches Polymer enthält.

Zusätzlich zu wasserlöslichem Polymer, niedermolekularer Organosiliciumverbindung und Organopolysiloxanharz können die erfindungsgemäß eingesetzten Pulver gegebenenfalls weitere Stoffe enthalten bzw. es können zu deren Herstellung weitere Stoffe mitversprüht werden.

Beispiele für solche weiteren Stoffe sind mit Wasser mischbare Lösungsmittel, wie Diacetonalkohol, mit Wasser nicht mischbare Lösungsmittel, wie Toluol und Gemische aus Xylolisomeren, andere ionogene und nichtionogene Emulgatoren als wasserlösliche Polymere, wie Natriumlaurylsulfat, Fungicide, Antischaummittel, Farbstoffe, Pigmente, Füllstoffe mit einer Oberfläche von weniger als 50 $m^2/g$, wie Kreidepulver, Calciumcarbonat und Quarzmehl.

Falls zur Herstellung der erfindungsgemäß eingesetzten Pulver weitere Stoffe verwendet werden, handelt es sich um Mengen von vorzugsweise 0,1 bis 60 Gewichtsprozent, besonders bevorzugt von 0,1 bis 50 Gewichtsprozent, jeweils bezogen auf das Gesamtgewicht der zur Herstellung des jeweiligen Pulvers eingesetzten Organosiliciumverbindungen.

In den zu versprühenden Gemischen beträgt die Menge von Wasser vorzugsweise 45 bis 95 Gewichtsprozent, insbesondere 60 bis 85 Gewichtsprozent, jeweils bezogen auf das Gesamtgewicht des zu versprühenden Gemisches.

Die Sprühtrocknung kann in beliebigen zur Sprühtrocknung von Flüssigkeiten geeigneten und bereits vielfach bekannten Vorrichtungen, beispielsweise solchen mit mindestens einer Drallzerstäuberdüse oder mit einer rotierenden Zerstäuberscheibe, in einem vorzugsweise erwärmten Trockengasstrom, wie etwa Luft oder Stickstoff, durchgeführt werden. Enthalten die zu versprühenden Gemische organische Lösungsmittel, wie Toluol oder Xylol, so wird die Sprühtrocknung bevorzugt mit Stickstoff als Trockengasstrom durchgeführt.

Vorzugsweise beträgt die Eintrittstemperatur des Trockengasstromes 80 bis 250 °C, insbesondere 110 bis 190 °C und die Austrittstemperatur des beim Trocknen gebildeten Gasstromes 40 bis 100 °C, insbesondere 50 bis 90 °C.

Getrennt von dem der Sprühtrocknung zugeführten Gemisch können in die Vorrichtung, in der die Sprühtrocknung stattfindet, Antiblock-(Antiback)-mittel eingeführt werden. Das Pulver kann aber auch im nachhinein mit Antiblock-(Antiback)mittel versetzt werden. Falls Antiblockmittel mitverwendet werden, sind Mengen derartiger Blockmittel von 1 bis 20 Gewichtsprozent, bezogen auf das Gesamtgewicht der verwendeten Organosiliciumverbindungen, bevorzugt. Die Antiblockmittel sind meist anorganische, feste Stoffe mit mittleren Teilchengrößen von 0,01 bis 50 µm. Es kann sich dabei z.B. um Aluminiumsilicate, kolloidales Siliciumdioxidgel, pyrogen erzeugtes Siliciumdioxid, gemahlene Tone, Leichtspat, Talkum, Zemente, Kreidepulver oder Diatomeenerde handeln.

Die erfindungsgemäßen Beschichtungsmassen enthalten in Wasser redispergierbare, auf wasserlöslichem Polymer, niedermolekularen Organosiliciumverbindungen und hochmolekularen Polyorganosiloxanharzen basierende Pulver der beschriebenen Zusammensetzung insgesamt in Mengen von bevorzugt 1 bis 60 Gewichtsprozent, besonders bevorzugt von 1 bis 40 Gewichtsprozent, insbesondere von 2 bis 30 Gewichtsprozent, jeweils bezogen auf das Gesamtgewicht der Beschichtungsmasse.

Die übrigen Komponenten der erfindungsgemäßen Beschichtungsmassen können die gleichen sein wie bei den bisher bekannten Beschichtungsmassen für mineralische Untergründe. Vorzugsweise handelt es sich dabei um Pigmente, Füllstoffe, wie beispielsweise Calciumcarbonat, Talkum, Quarz, Aluminiumsilicate und Kunststofffasern, Verdicker, wie Cellulose, Dispergierhilfsmittel, Fungizide, Konservierungsmittel, Verfilmungshilfsmittel, Entschäumer, Netzmittel und zusätzliche Bindemittel auf der Basis von organischen Polymeren, wie z.B. Acrylat-Dispersionen.

Die Herstellung der erfindungsgemäßen Beschichtungsmassen erfolgt durch Vermischen der einzelnen Bestandteile, wobei die redispergierbaren Pulver bevorzugt direkt zu den übrigen Bestandteilen der Beschichtungsmasse gegeben werden. Es können die Pulver aber auch zuerst in Wasser redispergiert werden und dann in dieser Form mit den weiteren Komponenten vermischt werden.

Die erfindungsgemäßen Beschichtungsmassen können nun auf allen Substraten aufgebracht werden auf die auch die bisher bekannten Beschichtungssysteme aufgebracht worden sind. So eignen sich die erfindungsgemäßen Beschichtungsmassen für mineralische Substrate, Metall, Holz und Kunststoff.

Vorzugsweise handelt es sich bei den Substraten um mineralische Substrate, wie beispielsweise Beton, Naturstein, Putze, Kalksandstein, Gips und Faserzement, insbesondere um Beton, Naturstein, Putze, und Faserzement.

Das Aufbringen der erfindungsgemäßen Beschichtungsmassen auf die jeweiligen Substrate kann auf beliebige und bisher bekannte Weise erfolgen, wie beispielsweise durch Streichen, Rollen, Sprühen und Tauchen, wobei Streichen und Rollen bevorzugt ist.

Vorzugsweise wird die erfindungsgemäße Beschichtungsmasse auf das jeweilige Substrat bei einer Temperatur von 5 bis 50°C und dem Druck der umgebenden Atmosphäre aufgebracht und bei denselben Bedingungen trocknen gelassen.

Die erfindungsgemäßen Beschichtungsmassen haben den Vorteil, daß sie auf relativ einfache Art und Weise herstellbar sind und insbesondere im Vergleich zu Silikatfarben und filmbildenden Dispersionsfarben universell, d.h. für alle mineralischen Untergründe, einsetzbar sind.

Die erfindungsgemäßen Beschichtungsmassen haben den Vorteil, daß sie die damit behandelten Oberflächen hydrophobieren, d.h. für flüssiges Wasser, wie Regenwasser, abweisend machen, wobei eine hohe Kohlendioxid- und Wasserdampfdurchlässigkeit des Anstrichs gewährleistet ist.

Des weiteren haben die erfindungsgemäßen Beschichtungsmassen den Vorteil, daß sich die damit gemachten Anstriche durch eine hohe Beständigkeit, insbesondere Witterungsbeständigkeit, auszeichnen.

Darüberhinaus haben die erfindungsgemäßen Beschichtungsmassen den Vorteil, daß sie keine bzw. nur eine geringe Verschmutzungsneigung aufweisen.

In den nachfolgenden Beispielen beziehen sich alle Angaben von Teilen und Prozentsätzen, soweit nichts anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C, durchgeführt. Alle in den Beispielen angeführten Viskositätsangaben sollen sich auf eine Temperatur von 25°C beziehen.

Die kapillare Wasseraufnahme ($w_{24}$-Wert) wird gemäß DIN 52617 (Deutsche Industrie Norm) geprüft. Dabei wird ein Kalksandsteinprobenkörper (Vollstein KS DF) mit den Ausmaßen 11,5 cm x 11,5 cm x 2,5 cm und einer Rohdichte von 2,0 g/cm$^3$ zweimal im Abstand von 24 Stunden mit der jeweiligen Beschichtungsmasse beschichtet. Der Probekörper wird anschließend 24 Stunden bei Raumtemperatur, 72 Stunden im Umlufttrockenschrank bei 50°C und 48 Stunden bei Raumtemperatur gelagert. Dann wird der Probekörper 3 Tage lang jeweils 8 Stunden in fließendem Wasser gewässert, wobei die zu prüfende Fläche auf einem Gitter gelagert wird und die Eintauchtiefe des Probekörpers 1 cm beträgt. Anschließend wird der Probekörper bei 50°C 72 Stunden im Umlufttrockenschrank und dann 72 Stunden bei Raumtemperatur getrocknet und dann gewogen. Der Probekörper wird dann mit der beschichteten Seite auf einen, in einer Wanne liegenden, mit Wasser gesättigten Weichschaumstoff gelegt. Durch das Eigengewicht des Probekörpers wird soviel Wasser aus dem Schaumstoff gedrückt, daß der Stein stets mit Wasser in Kontakt ist und saugen kann. Der Schaumstoff muß dabei während der gesamten Prüfzeit wassergesättigt gehalten werden. Nach 24 Stunden Schwammlagerung wird der Stein herausgenommen und gewogen. Der $w_{24}$-Wert ergibt sich bei einer Fläche von (11,5 x 11,5) cm$^2$ aus folgender Formel:

$$w_{24}\text{-Wert} = \frac{\text{Aufgenommene Wassermenge/Fläche in kg/m}^2}{(24\ \text{Stunden})^{1/2}}$$

Die Bestimmung der Wasserdampfdurchlässigkeit (WDDU, sd-Wert) erfolgt nach DIN 52615. Dabei wird eine Polyethylenfritte im Abstand von 24 Stunden zweimal mit der jeweiligen Beschichtungsmasse beschichtet (Naßschichtdicke: ca. 400 g/m$^2$). Anschließend erfolgt eine 14-tägige Lagerung bei 23°C und 50% relativer Luftfeuchtigkeit. Dann wird die beschichtete Fritte auf eine Polyethylendose mit einem Volumen von 500 ml, die mit 200 g einer gesättigten Ammoniumdihydrogenphosphatlösung befüllt ist, dampfdicht aufgebracht. Aus dem Ausgangsgewicht und der Gewichtsabnahme nach 24, 48 und 72 stündiger Lagerung bei 23 °C und 50 % relativer Luftfeuchtigkeit wird die durchschnittliche Gewichtsabnahme pro 24 Stunden berechnet. Der für die Wasserdampfdurchlässigkeit (WDDU) charakteristische sd-Wert ergibt sich dann nach folgender Formel:

$$\text{sd-Wert} = \frac{\text{Konstante}}{\text{Gewichtsabnahme in g/m}^2\ \text{Meßfläche und 24 Stunden}}$$

Zur Bestimmung der Kreidung wird ein Pappkarton mit der jeweiligen Beschichtungsmasse beschichtet (ca. 200μm Naßschichtdicke). Nach einer Woche Lagerung bei Raumtemperatur wird die Beschichtung mit einem Wassertropfen versetzt. Der Wassertropfen wird anschließend durch Reiben mit dem Finger (20 mal) auf der Beschichtung verteilt. Dann läßt man das Wasser vom beschichteten Karton ablaufen und beurteilt visuell die Trübung des abgelaufenen Wassers.

Beurteilung:      klares Wasser bedeutet keine Kreidung leicht trübes Wasser bedeutet geringe Kreidung milchig trübes Wasser bedeutet starke Kreidung

Die Scheuerbeständigkeit wird nach DIN 53778 geprüft. Dabei wird die jeweilige Beschichtung mittels eines Filmziehgeräts auf eine Leneta®-Folie in der Weise aufgebracht, daß nach 28-tägiger Lagerung bei 23°C und 50 % relativer Luftfeuchtigkeit eine Trockenfilmschichtdicke von ca. 100 μm resultiert. Anschließend wird die getrocknete Beschichtung in einer Scheuereinrichtung (Scheuerprüfgerät nach Gardner, Modell M 105-A) unter definierten Bedingungen mit einer Scheuerbürste naß gescheuert. Es wird dabei die Anzahl der Scheuercyclen bestimmt, bis der Untergrund, d.h. die Folie, klar erkennbar freigelegt ist.

## I) Silanpulver I

In einer Lösung von 96 Teilen durch teilweise Verseifung von Polyvinylacetat hergestelltem Polyvinylalkohol mit einer Verseifungszahl von 190 (= mg KOH, die zur Verseifung der restlichen Acetatgruppen erforderlich sind) und einem Molekulargewicht von etwa 26 000 in 1200 Teilen Wasser werden 800 Teile eines Teilhydrolysates von Isooctyltriethoxysilan mit einer Viskosität von 3,2 mm$^2$/s emulgiert. Anschließend verdünnt man durch Zugabe von 1488 Teilen Wasser.

Die so erhaltene Emulsion wird in einem mit einer Drallzerstäuberdüse arbeitenden Sprühtrockner (käuflich erhältlich unter der Bezeichnung "Nubilosa AJM 014" bei der Firma Nubilosa, Konstanz) bei einem Düsendruck von 4000 hPa, einem Durchsatz von 1,3 Liter/Stunde, einer Lufteintrittstemperatur von 125 °C und einer Gasaustrittstemperatur von 85°C sprühgetrocknet.

Es wird ein in Wasser redispergierbares Pulver, welches nachfolgend als Silanpulver I bezeichnet wird, mit einer Restfeuchte von 1,8 % erhalten.

## II) Harzpulver II

Eine 50 %ige Lösung eines Methylsiliconharzes der Summenformel $Me_{1,14}SiO_{1,40}(OEt)_{0,06}$ in Toluol mit einer Viskosität von 7,4 mm$^2$/s (käuflich erhältlich unter der Bezeichnung "Harzlösung K" bei der Wacker-Chemie GmbH, München) wird durch Abdestillieren des Lösungsmittels bei einer Temperatur von 90 °C und einem Druck von 20 hPa auf einen Harzanteil von 81,5 % aufkonzentriert. Die erhaltene Harzlösung weist eine Viskosität von 1732 mm$^2$/s auf.

Anschließend werden entsprechend der oben unter I) beschriebenen Vorgehensweise 982 Teile dieser aufkonzentrierten Methylsiliconharzlösung emulgiert und, in Abänderung zu der oben unter I) beschriebenen Verfahrensweise, im Stickstoffstrom anstelle des Luftstroms sprühgetrocknet.

Es wird ein in Wasser redispergierbares Pulver, welches nachfolgend als Harzpulver II bezeichnet wird, mit einer Restfeuchte von 2,0 % erhalten.

## III) Silan/Harzpulver III

300 Teile des oben unter I) verwendeten Teilhydrolysates von Isooctyltriethoxysilan mit einer Viskosität von 3,2 mm$^2$/s und 1800 Teile der oben unter II) verwendeten 50 %igen toluolischen Methylsiliconharzlösung mit einer Viskosität von 7,4 mm$^2$/s werden vermischt. Anschließend wird Toluol bei einer Temperatur von 90°C und einem Druck von 20 hPa abdestilliert. Das erhaltene Gemisch weist einen mittels $^1$H-NMR bestimmten Resttoluolgehalt von 0,09 % und eine Viskosität von 2050 mm$^2$/s auf.

Anschließend werden entsprechend der oben unter I) beschriebenen Vorgehensweise 800 Teile dieses Gemisches emulgiert und sprühgetrocknet.

Es wird ein in Wasser redispergierbares Pulver, welchesnachfolgend als Silan/Harzpulver III bezeichnet wird mit einer Restfeuchte von 1,9 % erhalten.

## IV) Silan/Harzpulver IV

150 Teile des oben unter I) verwendeten Teilhydrolysates von Isooctyltriethoxysilan mit einer Viskosität von 3,2 mm$^2$/s und 2100 Teile der oben unter II) verwendeten 50 %igen toluolischen Methylsiliconharzlösung mit einer Viskosität von 7,4 mm$^2$/s werden vermischt. Anschließend wird Toluol bei einer Temperatur von 90 °C und einem Druck von 20 hPa abdestilliert. Das erhaltene Gemisch weist einen mittels $^1$H-NMR bestimmten Resttoluolgehalt von 0,11 % und eine Viskosität von 11 200 mm$^2$/s auf.

Anschließend werden entsprechend der oben unter I) beschriebenen Vorgehensweise 800 Teile dieses Gemisches emulgiert und sprühgetrocknet.

Es wird ein in Wasser redispergierbares Pulver, welches im folgenden als Silan/Harzpulver IV bezeichnet wird, mit einer Restfeuchte von 1,7 % erhalten.

**Herstellung von pastösen Siliconharzfarben**

**Beispiel 1**

Eine pastöse Siliconharzfarbe A wird durch Vermischen der nachfolgenden Einsatzstoffe in der genannten Reihenfolge mit Hilfe eines Labordissolvers hergestellt:

359  Teile Wasser,
1    Teil Pigmentverteiler (käuflich erhältlich unter "Pigmentverteiler A" bei der BASF AG, Ludwigshafen),
2    Teile Fungizid (käuflich erhältlich unter "Parmetol DF 19" bei Schuelke und Mayr, D-Norderstedt)
5    Teile Celluloseverdicker (käuflich erhältlich unter "Tylose H 6000 xp", Hoechst AG, Frankfurt),
120  Teile Titandioxid,
275  Teile Calciumcarbonat,
60   Teile Talkum,
20   Teile Silanpulver I,
60   Teile Harzpulver II,
1    Teil 25 %ige wässrige Ammoniaklösung und
95   Teile Polymerdispersion (käuflich erhältlich unter "Acronal 290 D" bei der BASF AG, Ludwigshafen).

Eine pastöse Siliconharzfarbe B wird analog der Siliconharzfarbe A hergestellt, jedoch mit der Abänderung, daß anstelle von 20 Teilen Silanpulver I und 60 Teilen Harzpulver II 10 Teile Silanpulver I und 70 Teile Harzpulver II eingesetzt werden.

Die beiden Siliconharzfarben werden anschließend hinsichtlich ihrer kapillaren Wasseraufnahme ($w_{24}$-Wert), ihrer Wasserdampfdurchlässigkeit (WDDU, sd-Wert), ihres Kreidungsund ihres Bewitterungsverhaltens untersucht. Die Ergebnisse finden sich in Tabelle 1.

Tabelle 1

| Siliconharzfarbe | $w_{24}$-Wert [kg/m$^2$/h$^{1/2}$] | WDDU, sd-Wert [m] | Kreidung | Bewitterung a) |
|---|---|---|---|---|
| A | 0,08 | 0,08 | gering | keine Risse |
| B | 0,09 | 0,11 | gering | keine Risse |

a) Kurzbewitterung: 1000 Stunden Q-UV-B

**Vergleichsbeispiel 1**

Pastöse Siliconharzfarben werden entsprechend der Vorgehensweise in Beispiel 1 hergestellt, jedoch mit der Abänderung, daß anstelle von 20 Teilen Silanpulver I und 60 Teilen Harzpulver II in einem

1. Versuch 80 Teile Silanpulver I (Siliconharzfarbe **V1C**) und in einem
2. Versuch 80 Teile Harzpulver II (Siliconharzfarbe **V1D**) eingesetzt werden.

Die so erhaltenen Siliconharzfarben werden anschließend wie in Beispiel 1 untersucht. Die Ergebnisse finden sich in Tabelle 2.

Tabelle 2

| Siliconharzfarbe | $w_{24}$-Wert [kg/m$^2$/h$^{1/2}$] | WDDU, sd-Wert [m] | Kreidung | Bewitterung a) |
|---|---|---|---|---|
| V1C | 0,07 | 0,01 | sehr stark | abgeblättert |
| V1D | 0,25 | 0,25 | gering | keine Risse |

a) Kurzbewitterung: 1000 Stunden Q-UV-B

Das Vergleichsbeispiel 1 zeigt, daß reine Silanpulver gut hydrophobieren, aber schlechtes Bindevermögen besitzen. Reine Harzpulver haben zwar gutes Bindevermögen, beeinflussen aber die Gasdurchlässigkeit negativ.

**Beispiel 2**

Pastöse Siliconharzfarben werden entsprechend der in Beispiel 1 beschriebenen Arbeitsweise hergestellt, jedoch mit der Abänderung, daß anstelle von 20 Teilen Silanpulver I und 60 Teilen Harzpulver II 80 Teile des Silan/Harzpulvers III (Siliconharzfarbe **E**) eingesetzt werden.

Die erhaltene Siliconharzfarbe wird anschließend wie in Beispiel 1 beschrieben untersucht. Die Ergebnisse finden sich in Tabelle 3.

**Beispiel 3**

Pastöse Siliconharzfarben werden entsprechend der in Beispiel 1 beschriebenen Arbeitsweise hergestellt, jedoch mit der Abänderung, daß anstelle von 20 Teilen Silanpulver I und 60 Teilen Harzpulver II 80 Teile des Silan/Harzpulvers IV (Siliconharzfarbe **F**) eingesetzt werden.

Die erhaltene Siliconharzfarbe wird anschließend wie in Beispiel 1 beschrieben untersucht. Die Ergebnisse finden sich in Tabelle 3.

Tabelle 3

| Siliconharzfarbe | $w_{24}$-Wert [kg/m$^2$/h$^{1/2}$] | WDDU, sd-Wert [m] | Kreidung | Bewitterung a) |
|---|---|---|---|---|
| E | 0,08 | 0,02 | gering | keine Risse |
| F | 0,09 | 0,03 | gering | keine Risse |

a) Kurzbewitterung: 1000 Stunden Q-UV-B

**Herstellung einer Siliconharzpulverfarbe**

**Beispiel 4**

Eine Siliconharzpulverfarbe G wird durch intensives Vermischen der nachfolgenden Einsatzstoffe in der genannten Reihenfolge hergestellt:

150 Teile Dispersionspulver (käuflich erhältlich unter "Vinnapas® Dispersionspulver RI 551 Z", Wacker-Chemie GmbH),
150 Teile Silan/Harzpulver IV,
200 Teile Titandioxid,
1 Teil Celluloseverdicker (käuflich erhältlich unter "Tylose H 6000 xp", Hoechst AG, Frankfurt),
25 Teile Aluminiumsilicat,
5 Teile Emulgator (käuflich erhältlich unter "Polyox WSR 205", Union Carbide, Düsseldorf),
15 Teile Hexandiol und
454 Teile Calciumcarbonat.

Diese Mischung wird dann mit Hilfe eines Labordissolvers in 500 Teilen Wasser dispergiert. Die erhaltene Farbe wird anschließend hinsichtlich ihrer kapillaren Wasseraufnahme und ihrer Scheuerbeständigkeit untersucht. Die Ergebnisse finden sich in Tabelle 4.

Tabelle 4

| Pulverfarbe | $w_{24}$-Wert [kg/m$^2$/h$^{1/2}$] | Scheuerbeständigkeit Cyclen |
|---|---|---|
| G | 0,09 | > 5000 |
| V2 | 0,09 | 100 |

**Vergleichsbeispiel 2**

Eine Pulverfarbe V2 wird entsprechend der in Beispiel 4 beschriebenen Arbeitsweise hergestellt, jedoch mit der Abänderung, daß anstelle von 150 Teilen des Silan/Harzpulvers IV 150 Teile des Silanpulvers I eingesetzt werden.

Die Farbe wird anschließend wie in Beispiel 4 beschrieben untersucht. Die Ergebnisse finden sich in Tabelle 4.

**Herstellung eines Siliconharzputzes**

**Beispiel 5**

Ein Siliconharzputz wird durch intensives Vermischen der nachfolgenden Einsatzstoffe in der genannten Reihenfolge hergestellt:

129 Teile Wasser,
25 Teile Celluloseverdicker (käuflich erhältlich unter "Tylose H 6000 xp", Hoechst AG, Frankfurt),
2 Teile Fungizid (käuflich erhältlich unter "Parmetol DF 19" bei Schuelke und Mayr, D-Norderstedt),
2 Teile Dispergierhilfsmittel (käuflich erhältlich unter "Dispex N 40", Krahn-Chemie GmbH, Hamburg),
70 Teile Polymerdispersion (käuflich erhältlich unter "Acronal 290 D" bei der BASF AG, Ludwigshafen),
2 Teile Verfilmungsmittel (käuflich erhältlich unter "Texanol" bei der Krahn-Chemie GmbH, Hamburg),
33 Teile Silan/Harzpulver III,
20 Teile Titandioxid,
715 Teile Calciumcarbonat und
2 Teile 25 %ige Natronlauge.

Aus dem so erhaltenen Siliconharzputz werden anschließend Prüfkörper (Scheiben mit einem Durchmesser von 9 cm und einer Dicke von 6 mm) hergestellt und die Wasseraufnahme bestimmt. Zur UV-Bewitterung wird der Putz auf Faserzementplatten aufgebracht. Die Wasseraufnahme des Putzes nach 24 Stunden Wasserlagerung beträgt 4 Gewichtsprozent. Der Putz ist nach 1000 Stunden Q-UV-B-Kurzbewitterung absolut rißfrei, nicht vergilbt und zeigt gegenüber Wasser einen hervorragenden Abperleffekt.

**Patentansprüche**

1. Beschichtungsmassen auf Basis von in Wasser redispergierbaren, wasserlösliches Polymer und Organosiliciumverbindungen enthaltenden Pulvern, dadurch gekennzeichnet, daß die Organosiliciumverbindungen aus mindestens einer niedermolekularen Organosiliciumverbindung mit einer Viskosität von höchstens 5 000 mm$^2$/s bei 25°C und mindestens einem hochmolekularen Organopolysiloxanharz, das eine Viskosität von mindestens 100 000 mm$^2$/s bei 25°C hat oder bei Raumtemperatur fest ist, bestehen.

2. Beschichtungsmassen gemäß Anspruch 1, dadurch gekennzeichnet, daß die niedermolekularen Organosiliciumverbindungen eine Viskosität von 0,5 bis 200 mm$^2$/s bei 25°C zeigen.

3. Beschichtungsmassen gemäß Anspruch 1 oder 2, dadurch gekennzeichnet, daß es sich bei den niedermolekularen Organosiliciumverbindungen um solche der Formel bzw. aus Einheiten der Formel

$$R_a(R^1O)_b SiO_{4-(a+b)/2} \qquad \text{(I)}$$

handelt, wobei

R gleich oder verschieden sein kann und einen einwertigen organischen Rest bedeutet,
R$^1$ gleich oder verschieden sein kann und ein Wasserstoffatom oder Alkylrest bedeutet,
a gleich 0, 1, 2 oder 3 ist und
b gleich 0, 1, 2, 3 oder 4 ist,

mit der Maßgabe, daß die Summe aus a+b kleiner oder gleich 4 ist und die Organosiliciumverbindung eine Viskosität von höchstens 5 000 mm$^2$/s bei 25°C hat.

4. Beschichtungsmassen gemäß einem oder mehreren der Ansprüche 1 bis 3, dadurch gekennzeichnet, daß es sich bei den hochmolekularen Organopolysiloxanharzen um solche aus Einheiten der Formel

$$R^2{}_c(R^3O)_d SiO_{4-(c+d)/2} \qquad \text{(II)}$$

handelt, wobei

R$^2$ gleich oder verschieden sein kann und eine für R angegebene Bedeutung hat,
R$^3$ gleich oder verschieden sein kann und eine für R$^1$ angegebene Bedeutung hat,
c gleich 0, 1, 2 oder 3 ist und
d gleich 0, 1, 2 oder 3 ist,

mit der Maßgabe, daß die Summe aus c+d kleiner oder gleich 3 ist und diese Organopolysiloxanharze eine Viskosität von mindestens 100 000 mm$^2$/s bei 25°C haben bzw. bei Raumtemperatur fest sind.

5. Beschichtungsmassen gemäß einem oder mehreren der Ansprüche 1 bis 4, dadurch gekennzeichnet, daß der Anteil an niedermolekularer Organosiliciumverbindung 3 bis 100 Gewichtsprozent, bezogen auf das Gesamtgewicht an eingesetztem, hochmolekularen Organopolysiloxanharz, beträgt.

6. Beschichtungsmassen gemäß einem oder mehreren der Ansprüche 1 bis 5, dadurch gekennzeichnet, daß sie in Wasser redispergierbare, auf wasserlöslichem Polymer, niedermolekularen Organosiliciumverbindungen und hochmolekularen Polyorganosiloxanharzen basierende Pulver der beschriebenen Zusammensetzung insgesamt in Mengen von 1 bis 60 Gewichtsprozent, bezogen auf das Gesamtgewicht der Beschichtungsmasse, enthalten.

7. Verfahren zur Herstellung von Beschichtungen, dadurch gekennzeichnet, daß die Beschichtungsmassen gemäß einem oder mehreren der Ansprüche 1 bis 6 auf das Substrat aufgebracht werden.

8. Verfahren nach Anspruch 7, dadurch gekennzeichnet, daß es sich bei den Substraten um mineralische Substrate, Metall, Holz und Kunststoff handelt.

9. Verfahren nach Anspruch 7 oder 8, dadurch gekennzeichnet, daß es sich bei den Substraten um mineralische Substrate handelt.

## Claims

1. Coating composition based on water-redispersible powders comprising water-soluble polymer and organosilicon compounds, characterized in that the organosilicon compounds consist of at least one low molecular weight organosilicon compound having a viscosity of not more than 5000 mm$^2$/s at 25°C and at least one high molecular weight organopolysiloxane resin which has a viscosity of at least 100,000 mm$^2$/s at 25°C or is solid at room temperature.

2. Coating composition according to Claim 1, characterized in that the low molecular weight organosilicon compounds have a viscosity of from 0.5 to 200 mm$^2$/s at 25°C.

3. Coating composition according to Claim 1 or 2, characterized in that the low molecular weight organosilicon compounds are those of the formula or comprising units of the formula

$$R_a(R^1O)_b SiO_{4-(a+b)/2} \tag{I},$$

in which

R can in each case be identical or different and is a monovalent organic radical,
R$^1$ can in each case be identical or different and is a hydrogen atom or alkyl radical,
a is 0, 1, 2 or 3 and,
b is 0, 1, 2, 3 or 4,

with the proviso that the sum of a+b is less than or equal to 4 and the organosilicon compound has a viscosity of not more than 5000 mm$^2$/s at 25°C.

4. Coating composition according to one or more of Claims 1 to 3, characterized in that the higher molecular weight organopolysiloxane resins are those comprising use of the formula

$$R^2{}_c(R^3O)_d SiO_{4-(c+d)/2} \qquad (II),$$

in which

R$^2$ can in each case be identical or different and is defined as for R,
R$^3$ can in each case be identical or different and is defined as for R$^1$,
c is 0, 1, 2 or 3, and
d is 0, 1, 2 or 3,

with the proviso that the sum of c+d is less than or equal to 3 and these organopolysiloxane resins have a viscosity of at least 100,000 mm$^2$/s at 25°C or are solid at room temperature.

5. Coating composition according to one or more of Claims 1 to 4, characterized in that the proportion of low molecular weight organosilicon compound is from 3 to 100 per cent by weight, based on the overall weight of high molecular weight of polysiloxane resin employed.

6. Coating composition according to one or more of Claims 1 to 5, characterized in that the overall content of water-redispersible powders of the composition described, based on water-soluble polymer, low molecular weight organosilicon compounds and high molecular weight polyorganosiloxane resins, is from 1 to 60 per cent by weight, based on the overall weight of the coating composition.

7. Process for the preparation of coatings, characterized in that the coating composition according to one or more of Claims 1 to 6 is applied to the substrate.

8. Process according to Claim 7, characterized in that the substrate is a mineral substrate, metal, wood or plastic.

9. Process according to Claim 7 or 8, characterized in that the substrate is a mineral substrate.

**Revendications**

1. Composition de revêtement à base de poudres redispersibles dans l'eau, contenant un polymère hydrosoluble et des composés organosiliciques, caractérisée en ce que les composés organosiliciques contiennent au moins un composé organosilicique de faible poids moléculaire, avec une viscosité de au plus 5000 mm$^2$/s à 25°C et au moins une résine organopolysiloxane de poids moléculaire élevé, qui a une viscosité d'au moins 100 000 mm$^2$/s à 25°C ou qui est solide à température ambiante.

2. Composition de revêtement suivant la revendication 1, caractérisée en ce que les composés organosiliciques de faible poids moléculaire présentent une viscosité de 0,5 à 200 mm$^2$/s à 25°C.

3. Composition de revêtement suivant la revendication 1 ou 2, caractérisée en ce que les composés organosiliciques de faible poids moléculaire consistent en ceux de formule ou comprenant des motifs de formule :

$$R_a(R^1O)_b SiO_{4-(a+b)/2} \qquad (I)$$

où

R peut être identique ou différent et représente un radical organique monovalent;
R$^1$ peut être identique ou différent et représente un atome d'hydrogène ou un radical alcoyle;
a est égal à 0, 1, 2 ou 3, et
b est égal à 0, 1, 2, 3 ou 4,

avec la condition que la somme a+b soit inférieure ou égale à 4 et que le composé organosilicique ait une viscosité de au plus 5000 mm$^2$/s à 25°C.

4.  Composition de revêtement suivant l'une ou plusieurs des revendications 1 à 3, caractérisée en ce que les résines organopolysiloxane de poids moléculaire élevé consistent en celles comprenant des motifs de formule :

$$R^2_c(R^3O)_d SiO_{4-(c+d)/2} \qquad\qquad (II)$$

où

R$^2$ peut être identique ou différent et a l'une des significations données pour R;
R$^3$ peut être identique ou différent et a l'une des significations données pour R$^1$;
c est égal à 0, 1, 2 ou 3, et
d est égal à 0, 1, 2 ou 3,

avec la condition que la somme c+d soit inférieure ou égale à 3 et que ces résines organopolysiloxane aient une viscosité d'au moins 100 000 mm$^2$/s à 25°C, ou soient solides à température ambiante.

5.  Composition de revêtement suivant l'une ou plusieurs des revendications 1 à 4, caractérisée en ce que la quantité de composé organosilicique à faible poids moléculaire s'élève de 3 à 100% en poids, sur base du poids total de résine organopolysiloxane à poids moléculaire élevé, utilisée.

6.  Composition de revêtement suivant l'une ou plusieurs des revendications 1 à 5, caractérisée en ce qu'elle contient les poudres redispersibles dans l'eau, à base d'un polymère hydrosoluble, de composés organosiliciques à faible poids moléculaire et de résines organopolysiloxane à poids moléculaire élevé, de la composition décrite, au total en la quantité de 1 à 60% en poids, sur base du poids total de la composition de revêtement.

7.  Procédé de préparation de revêtements, caractérisé en ce que les compositions de revêtement suivant l'une ou plusieurs des revendications 1 à 6 sont appliquées sur le substrat.

8.  Procédé suivant la revendication 7, caractérisé en ce que le substrat consiste en un subsrat minéral, du métal, du bois et une matière plastique.

9.  Procédé suivant la revendication 7 ou 8, caractérisé en ce que les substrats sont des substrats minéraux.